# EUROPÄISCHE PATENTSCHRIFT

(11) **EP 1 255 092 B1**
(45) Veröffentlichungstag und Bekanntmachung des Hinweises auf die Patenterteilung: **21.10.2009**
(21) Anmeldenummer: 02006428.3
(22) Anmeldetag: 22.03.2002
(51) Int. Cl.: G01C 21/36

(54) **Vorrichtung und Verfahren zur Informationsanzeige in einem Fahrzeug**
Device and method for displaying information in a vehicle
Dispositif et procédé pour afficher de l'information dans un véhicule

(30) Priorität: 02.05.2001 DE 10121404
(43) Veröffentlichungstag der Anmeldung: 06.11.2002
(73) Patentinhaber: Volkswagen Aktiengesellschaft, 38436 Wolfsburg (DE)
(72) Erfinder: Sievers, Stefan, 38553 Wasbüttel (DE); Kriegel, Dieter, 38528 Adenbüttel (DE); Dobberkau, Thomas, 38527 Meine (DE); Petzold, Bernd, Dr.-Ing., 31234 Edemissen (DE); Woike, Rüdiger, 38114 Braunschweig (DE)

(56) Entgegenhaltungen:
- EP-A- 1 030 167
- WO-A-00/37890
- US-A- 5 787 383
- US-A- 5 948 040

## Beschreibung

Die Erfindung betrifft eine Vorrichtung sowie ein Verfahren zur Informationsanzeige in einem Fahrzeug, mit einer eine Eingabe von Start- und Zielinformationen ermöglichenden Dateneingabevorrichtung, mit einer Straßeninformationen aufweisenden Datenbank, mit einer mit Hilfe der Start- und Zielinformationen anhand der in der Datenbank gespeicherten Straßeninformationen eine Fahrtstrecke berechnenden Streckenberechnungseinheit, und mit einer die berechnete Fahrtstrecke anzeigenden Anzeigeeinheit. Ziel der Erfindung ist, dem Benutzer von Informationsanzeigen, insbesondere von Navigationsgeräten, schon bei der Anzeige der in der Fahrtstrecke zu befahrenden Straßen Zusatzinformationen zu diesen Straßen zu präsentieren.

Aus der Druckschrift DE 197 36 774 A1 ist ein Verfahren zur Informationsanzeige in einem Kraftfahrzeug bekannt. Bei diesem Verfahren werden durch eine Kamera Verkehrszeichen aufgenommen und durch eine Steuer-/Auswerteeinheit erkannt. Die erkannten Verkehrszeichen werden dem Fahrer des Kraftfahrzeugs in einer Anzeigeeinheit angezeigt. Der Vorteil dieses Verfahrens liegt darin, daß direkt ein Ausschnitt des von der Kamera aufgenommenen Bildes angezeigt wird, ohne daß eine Auswertung nach dem Inhalt des Verkehrszeichens bzw. eine Klassifikation erfolgt. Somit werden Auswertungsfehler vermieden, was aus produkthaftungsrechtlicher Sicht vorteilhaft ist. Nachteilig an diesem Verfahren ist, daß nur Zusatzinformationen zu der aktuell befahrenen Straßen angezeigt werden. Diese zusätzlichen Informationen muß der Fahrer des Fahrzeugs noch selber auswerten. Es ist mit Hilfe dieses Verfahrens nicht möglich, weitere Informationen zu zukünftig zu befahrenden Straßen anzuzeigen. Aus diesem Grund stehen dem Fahrer vor dem Fahrtantritt keine weiteren Informationen zu den zu befahrenden Straßen zur Verfügung.

Aus der europäischen Patentschrift EP 0 561 818 B1 ist ein Fahrzeugleit- und Zielführungssystem bekannt. Dieses Fahrzeugleit- und Zielführungssystem weist ein Dateneingabegerät zur Eingabe von Start- und Zielinformationen auf. Weiterhin weist dieses System einen Datenspeicher für Straßenpläne auf. Zur Navigation zwischen einem Startpunkt und einem Zielpunkt wird ein Zielvektor bestimmt, der vom Startpunkt zum Zielpunkt hinzeigt. Dieser Zielvektor ist zunächst sehr ungenau und wird durch die Hinzunahme von weiteren Informationen, die von einer Bake beim Passieren dieser an das Fahrzeug übermittelt werden, präzisiert. Das bedeutet, daß zu Beginn der Fahrt nur sehr wenige Informationen im Fahrzeug selbst vorgehalten werden. Der Fahrer hat keine Informationen über die zukünftige Fahrtstrecke, insbesondere über die zu befahrenden Straßen. Ihm wird mit Hilfe dieses Systems nur eine grobe Zielrichtung angegeben. Dies ist insbesondere bei der Planung von Fahrten nachteilig, da es wünschenswert wäre, Zusatzinformationen zu den zu befahrenden Straßen zu erhalten.

Aus der Druckschrift EP 0 811 960 A1 ist eine Navigationsvorrichtung für Fahrzeuge bekannt, mit deren Hilfe eine Fahrtstrecke zwischen einem Startpunkt und einem Zielpunkt unter Berücksichtigung von Gebühreninformationen berechnet werden kann. Diese Vorrichtung ermöglicht dem Fahrer, einen Start- und einen Zielpunkt einzugeben. Weiterhin kann der Fahrer angeben, ob er mautpflichtige Straßen benutzen will oder nicht. Anhand der Benutzereingabe wird eine Fahrtstrecke berechnet. Wechselt der Fahrer während der Fahrt auf der vorher berechneten Strecke die Art der Straße, beispielsweise von einer gebührenfreien auf eine mautpflichtige Straße, so berechnet diese Vorrichtung eine neue Fahrtstrecke, wobei bei der neu berechneten Fahrtstrecke berücksichtigt wird, daß nun auch mautpflichtige Straßen benutzt werden können. Anhand von Entfernungsinformationen zwischen aktuellem Standort und Ziel ist die beschriebene Vorrichtung in der Lage, zwischen einem gebührenfreien und gebührenpflichtigen Modus zu wechseln, wenn die Fahrtstrecke zwischen aktueller Position und Ziel durch die Benutzung von gebührenpflichtigen Straßen in einer Weise verkürzt wird, daß die Fahrtkosten gegenüber der Fahrt auf gebührenfreien Straße verringert werden. Nachteilig an diesem Verfahren ist, daß der Benutzer vor Fahrtantritt keine Zusatzinformationen über die zu befahrenden Straßen erhält. Der Benutzer kann nur eingeben, ob er zunächst ausschließlich gebührenpflichtige oder ausschließlich gebührenfrei Straßen benutzen will. Die Vorrichtung ermittelt während der Fahrt selbständig, ob die Benutzung einer gebührenpflichtigen Straße gegenüber der Benutzung einer gebührenfreien Straße kostengünstiger ist. Aus diesem Grund kennt der Fahrer vor Fahrtantritt nicht die von ihm zu befahrene Strecke. Auch kann er vor Fahrtantritt nicht abschätzen, wie hoch die eventuell anfallenden Mautgebühren sein werden.

Der Erfindung liegt die Aufgabe zugrunde, eine Vorrichtung zur Verfügung zu stellen, die neben der reinen Fahrtstrecke weitere Informationen bereitstellt.

Die zuvor hergeleitete und aufgezeigte Aufgabe wird erfindungsgemäß dadurch gelöst, daß die Datenbank den Straßeninformationen zugeordnete Zusatzinformationen aufweist und daß die Anzeigeeinheit bei der Anzeige der Fahrtstrecke die Zusatzinformationen anzeigt. Durch die Eingabe von Start- und Zielinformationen wird eine Streckenberechnung ermöglicht. Das Ergebnis der Streckenberechnung basiert auf in einer Datenbank gespeicherten Straßeninformationen. Nachdem eine entsprechende Strecke berechnet worden ist, wird diese mit Hilfe der Anzeigeeinheit angezeigt. Neben den bloßen Straßeninformationen können erfindungsgemäß auch weitere Informationen, wie beispielsweise Straßengebühren (Maut), Fährstrecken und ähnliche bei der Anzeige der Fahrtstrecke mit angezeigt werden. Die Anzeigeeinheit zeigt so in Verbindung mit einer angezeigten Straße diese Zusatzinformationen an.

Vorzugsweise werden die Zusatzinformationen als graphische Symbole dargestellt. Dazu sind u.a. Piktogramme gut geeignet. Graphische Symbole können durch den Fahrer schnell erkannt werden. Einfache Informationen sind somit leicht und verständlich dem Fahrer präsentierbar.

Dadurch, daß die Zusatzinformationen Mautinformationen enthalten und daß die Anzeigeeinheit eine mautpflichtige Straße bei der Anzeige der Fahrtstrecke als mautpflichtig anzeigt, kann der Fahrer vor Fahrtbeginn die ihm entstehenden Kosten durch eventuelle Mautgebühren abschätzen. Dies ist hilfreich, da Mautgebühren in einigen Fällen einen Großteil der Gesamtfahrtkosten ausmachen. Da bei der Anzeige der Fahrtstrecke schon die Mautinformationen, insbesondere die Höhe der Mautgebühren einzelner Streckenabschnitte, zu den einzelnen Straßen mit angezeigt werden, kann der Fahrer vor Fahrtbeginn einzelne mautpflichtige Streckenabschnitte aus der Fahrtstrecke herausnehmen und diese durch alternative, gebührenfreie Streckenabschnitte ersetzen. Das ermöglicht eine individuelle Fahrtstreckengestaltung schon vor Fahrtbeginn. Beispielsweise kennt der Fahrer eine zu einer mautpflichtigen Straße parallele geführte, gebührenfreie Straße, die er benutzen möchte. Er gibt mit Hilfe der Dateneingabevorrichtung ein, daß er die jeweilige mautpflichtige Straße nicht benutzen will. Danach kann er sich mit Hilfe der Streckenberechnungseinheit eine Alternativstrecke berechnen lassen. Auch kann er mit Hilfe der Dateneingabevorrichtung die Alternativstrecke selbst eingeben.

Besonders schnell kann der Fahrer mautpflichtige Straßen erkennen, wenn die Anzeigeeinheit die mautpflichtige Straße mit einem Münzsymbol anzeigt. Das Münzsymbol kann neben dem Straßennamen angeordnet sein, so daß der Fahrer diese Information mit einem Blick auf die Anzeigeeinheit erhält. Ihm fällt das Münzsymbol sofort ins Auge und er ist über die mautpflicht der jeweiligen Straße informiert.

Es ist häufig so, daß einzelne Streckenabschnitte nachträglich als mautpflichtige Streckenabschnitte vorgesehen werden. Auch ändern sich die Mautgebühren von mautpflichtigen Straßen nach einer gewissen Zeit. Eine Datenbank kann immer nur den aktuellen Stand abbilden. Verändern sich einzelne Parameter in der Realität gegenüber der Datenbank, so kann eine mit Hilfe dieser Datenbank berechnete Fahrtstrecke von den tatsächlichen Gegebenheiten abweichen. Dies kommt häufig dann vor, wenn sich die der Datenbank zugrunde liegenden Daten, wie beispielsweise Mautgebühren, häufig ändern. Auch ist der Datenbankumfang abhängig von der Menge der gespeicherten Daten. So ist beispielsweise eine Datenbank, die Informationen über Mautgebühren ausländischer Straßen enthält, in einem Kraftfahrzeug, das sich ausschließlich auf inländischen Straßen bewegt, nicht notwendig. Wenn diese Daten aber vorgehalten werden, vergrößert sich das Volumen der Datenbank. Besser wäre es, wenn beim Grenzübertritt zwischen zwei Ländern die landesspezifischen Mautgebühren über eine Luftschnittstelle von einer entfernten Datenbasis in das Kraftfahrzeug, bzw. die im Kraftfahrzeug vorhandene Datenbank geladen wird. Dies wird erfindungsgemäß dadurch erreicht, daß die Vorrichtung eine Sende- und Empfangsvorrichtung aufweist, daß die Sende- und Empfangsvorrichtung die Zusatzinformationen über eine Luftschnittstelle von einer entfernten Datenbasis lädt und daß die Datenbank die geladenen Zusatzinformationen speichert. Dazu wird auch vorgeschlagen, daß die Sende- und Empfangsvorrichtung ortsspezifische Mautgebühren über die Luftschnittstelle von einer entfernten Datenbasis lädt und daß die Datenbank die geladenen, ortsspezifischen Mautgebühren speichert. Dadurch wird das Volumen der Datenbank im Kraftfahrzeug klein gehalten. Außerdem stehen stets aktuelle Informationen zur Verfügung.

Die Gesamtkosten, die durch mautpflichtige Straßen entstehen, lassen sich mit einer Kostenberechnungseinheit berechnen und durch die Anzeigeeinheit anzeigen. Dadurch ist eine Reisekostenrechnung schon vor Fahrtantritt möglich.

Vor dem Reiseantritt kann es hilfreich sein, daß unterschiedliche Fahrtstrecken alternativ berechnet werden. Dadurch erhält der Fahrer einen Überblick über mögliche Fahrtstrecken und kann diese unter Kosten- und/oder Zeitgesichtspunkten bewerten. Bei der Anzeige der alternativen Fahrtstrecken kann der Fahrer unter Verwendung der angezeigten Zusatzinformationen die für ihn beste Fahrtstrecke auswählen. Nach einer Ausgestaltung der erfindungsgemäßen Vorrichtung berechnet die Streckenberechnungseinheit zumindest zwei alternative Fahrtstrecken, wobei den jeweiligen alternativen Berechnungen unterschiedliche Vorgaben zugrunde liegen. Diese Vorgaben können u.a. Kostenlimits oder aber auch Zeitlimits sein.

Bei der Anzeige der Fahrtstrecke ist es vorteilhaft, daß die Anzeigeeinheit zumindest einen Teil der Straßen, zumindest eines Teils der Fahrtstrecke, in einer Liste anzeigt. In der Liste erscheinen dann z.B. die Straßennamen. Zusätzlich zu den Straßennamen und eventuellen Entfernungsinformationen und Richtungsinformationen können noch die Zusatzinformationen angezeigt werden. So ist es beispielsweise denkbar, daß bei einer gebührenpflichtigen Straße ein Münzsymbol neben dem Straßennamen angezeigt wird. Der Fahrer hat dadurch einen schnellen Überblick sowohl über die Fahrtstrecke als auch über die Zusatzinformationen.

Eine gute Orientierung wird dadurch ermöglicht, daß die Anzeigeeinheit zumindest einen Teil der Fahrtstrecke auf einer digitalen Straßenkarte anzeigt. Die zu befahrenden Straßen können auf der digitalen Straßenkarte farbig markiert sein. Zusatzinformationen zu den einzelnen Straßen können mit unterschiedlichen Farbcodes versehen sein. So können beispielsweise Schnellstraßen von Landstraßen durch unterschiedliche Farben voneinander unterscheidbar sein. Auch können gebührenpflichtige Straßen mit einer dafür vorgesehenen Farbe oder anderen Markierung, wie einem Münzsymbol, kenntlich gemacht werden.

Mit einer hohen Genauigkeit lassen sich ortsspezifische Zusatzinformationen von der räumlich entfernten Datenbasis laden, wenn eine Ortsbestimmungseinheit, beispielsweise ein GPS-System, den aktuellen Ort des Fahrzeugs ermittelt und die Sende- und Empfangsvorrichtung anhand des ermittelten Orts die Zusatzinformationen von der räumlich entfernten Datenbasis lädt und die Datenbank die geladenen Informationen speichert. Hierbei ist beispielsweise zu denken an regional unterschiedliche Geschwindigkeitsbegrenzungen, an Fahrpläne von Autofähren und Autozügen u.ä.. Da es nicht möglich ist, in einer statischen Datenbank diese sich ändernden Informationen vorzuhalten, müssen diese Informationen über eine Luftschnittstelle von der Datenbank geladen werden. Auch wäre die Fülle der zu speichernden Daten zu groß, wenn alle verfügbaren Daten bereits in der ursprünglichen Datenbank enthalten wären.

Ein weiterer Gegenstand der Erfindung ist ein Verfahren zur Informationsanzeige in einem Fahrzeug, insbesondere unter Verwendung einer zuvor beschriebenen Vorrichtung, bei dem mit Hilfe von Start- und Zielinformationen eine Fahrtstrecke berechnet wird, bei dem die berechnete Fahrtstrecke angezeigt wird, bei dem neben der Fahrtstrecke Zusatzinformationen zu den zu befahrenden Straßen ermittelt werden und bei dem die ermittelten Zusatzinformationen angezeigt werden. Das Verfahren ermöglicht somit bei einer Navigation neben der reinen Streckenanzeige eine Anzeige von Straßen zugeordneten Zusatzinformationen.

Vorzugsweise wird ein Verfahren vorgeschlagen, bei dem die ermittelten Zusatzinformationen graphisch angezeigt werden. Die graphische Anzeige vereinfacht dem Fahrer das erkennen der Zusatzinformationen.

Besonders einfach lassen sich mautpflichtige Straßen von gebührenfreien Straßen unterscheiden, wenn für die zu befahrenden Straßen entstehende Mautgebüren Hilfe von graphischen Münzsymbolen angezeigt werden.

Um die in der Datenbank gespeicherten Daten möglichst aktuell halten zu können wird vorgeschlagen, daß die Zusatzinformationen von einer räumlich entfernten Datenbasis geladen werden und gespeichert werden. Dadurch können immer aktuelle Datenbestände geladen werden. Auch können Daten, die seit der letzten Aktualisierung geändert worden sind, in die Datenbank geladen werden.

Die Erfindung wird im folgenden anhand einer ein Ausführungsbeispiel darstellenden Zeichnung näher erläutert. In der Zeichnungen zeigen:
- Fig. 1: den Ablauf einer erfindungsgemäßen Routenplanung; und
- Fig. 2: die schematische Darstellung einer dynamischen Datenübertragung.

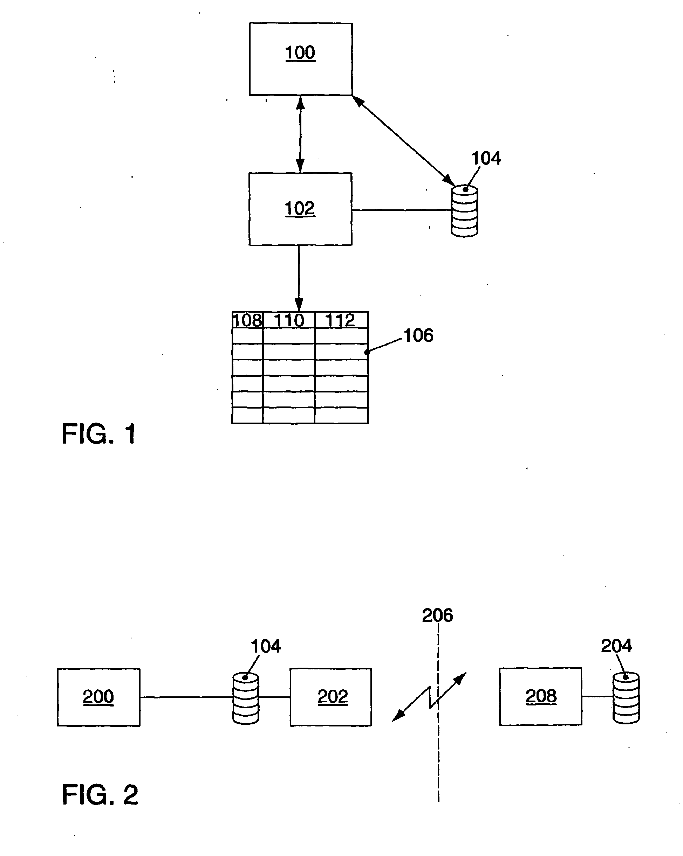

In Fig. 1 ist schematisch der Ablauf einer erfindungsgemäßen Routenplanung dargestellt. Der Fahrer gibt mit einer Dateneingabevorrichtung 100 Start- und Zielinformationen ein. Zunächst werden die eingegebenen Start- und Zielinformationen mit den in einer Datenbank 104 gespeicherten Informationen verglichen. Dabei wird geprüft, ob die eingegebenen Straßennamen in der Datenbank 104 vorhanden sind. Bei einer Fehleingabe erhält der Benutzer eine Auswahl aus ähnlichen Straßennamen. Er kann aus dieser Auswahl einen Ort auswählen oder seine Angaben selbst präzisieren. Nachdem gültige Start- und Zielinformationen in der Dateneingabevorrichtung 100 vorhanden sind, werden diese an eine Streckenberechnungseinheit 102 übermittelt. Die Streckenberechnungseinheit 102 berechnet mit Hilfe der Start- und Zielinformationen, sowie der in der Datenbank 104 vorhandenen Straßeninformationen eine mögliche Fahrtstrecke. Zu den auf der Fahrtstrecke befindlichen Straßen ermittelt die Streckenberechnungseinheit 102 außerdem aus der Datenbank 104 Zusatzinformationen. Die ermittelten Informationen werden von der Streckenberechnungseinheit 102 an die Anzeigeeinheit 106 übermittelt. Die Anzeigeeinheit 106 zeigt in einer Liste 108, 110, 112 die berechnete Fahrtstrecke an. In der Spalte 110 werden die Straßennamen der Fahrtstrecke angezeigt. Dabei kann der Benutzer auswählen, ob alle Straßen der Fahrtstrecke angezeigt werden, oder nur ein Teil der Straßen, beispielsweise nur die Hauptverkehrsstraßen. In der Spalte 112 werden Entfernungsinformationen und Richtungsinformationen zu den jeweiligen Straßen angezeigt. Die Spalte 108 zeigt die den Straßen zugeordneten Zusatzinformationen an. Bei einer mautpflichtigen Straße wird ein Münzsymbol angezeigt. Enthält die berechnete Fahrtstrecke einen Abschnitt, der mit einer Fähre überwunden werden muß, so kann in der Spalte 108 beispielsweise ein Schiffsymbol angezeigt werden. Neben dem lediglichen Anzeigen der Art der Strecke kann bei einer Mautinformation auch die anfallende Mautgebühr angezeigt werden. Auch können Kosten für Fährstrecken oder Zeiten einer möglichen Überfahrt angezeigt werden. Mit Hilfe der Anzeigeeinheit 106 erhält der Fahrer einen umfassenden Überblick über die berechnete Fahrtstrecke, sowie der befahrenen Straßen, mitsamt der zu diesen Straßen verfügbaren Zusatzinformationen.

Die in der Datenbank 104 gespeicherten Daten können sich mit der Zeit ändern. Um nicht den gesamten Datenbestand austauschen zu müssen, ist es hilfreich, wenn nur die geänderten Daten an die im Fahrzeug befindliche Datenbank 104 übertragen werden. Auch ist es hilfreich, wenn ortsspezifische Daten nur dann in der Datenbank 104 vorhanden sind, wenn das Fahrzeug sich tatsächlich an oder in der nähe dieses Orts befindet oder diesen Ort passieren wird. Mautinformationen zu Straßen eines Landes sind nur dann notwendig, wenn die Fahrtstrecke den Fahrer in oder durch dieses Land führt.

Wie in Fig. 2 dargestellt, lassen sich ortsspezifische Informationen oder sich ändernde Informationen über eine Luftschnittstelle 206 dynamisch an die Datenbank 104 von einer räumlich entfernten Datenbasis 204 übertragen. Durch die Ortsbestimmungseinheit 200 wird der aktuelle Ort des Fahrzeugs berechnet. Dies ist nur dann notwendig, wenn zu dem aktuellen Ort bestimmte Informationen von der Datenbasis 204 geladen werden sollen. Ansonsten kann mit Hilfe der Ortsbestimmungseinheit 200 ermittelt werden, welche Orte auf der berechneten Fahrtstrecke liegen. Die Ortsbestimmungseinheit 200 überprüft die Datenbank 104, ob zu den benötigten Orten Zusatzinformationen vorhanden sind. Ist dies nicht der Fall, so wird mit Hilfe einer Übertragungseinheit 202 über die Luftschnittstelle 206 eine Kommunikation mit einer räumlich entfernten Übertragungseinheit 208, die mit einer räumlich entfernten Datenbasis 204 verbunden ist, etabliert. Über die Luftschnittstelle 206 werden dann die benötigten Zusatzinformationen übertragen und in der Datenbank 104 gespeichert. Dadurch wird erreicht, daß die in der Datenbank 104 vorhandenen Daten stets aktuell sind und daß das Datenvolumen der Datenbank 104 gering gehalten werden kann. Einmal geladene Daten, die nicht mehr benötigt werden, können in der Datenbank 104 gelöscht werden. Für den Fall, daß sich Zusatzinformationen ändern, ist es auch möglich, daß von der Datenbasis 204 selbst, mit Hilfe der Übertragungseinheit 208, über die Luftschnittstelle 206 eine Kommunikation mit der Übertragungseinheit 202 eines Fahrzeugs aufgebaut wird. Die in der Datenbank 104 gespeicherten Daten werden dann durch die neuen Daten ersetzt. Dadurch wird eine noch größere Aktualität der Zusatzdaten gewährleistet, da die Aktualisierung durch die Datenbasis 204 ausgelöst wird und nicht durch das Fahrzeug.

### BEZUGSZEICHENLISTE

- 100: Dateneingabevorrichtung
- 102: Streckenberechnungseinheit
- 104: Datenbank
- 106: Anzeigeeinheit
- 108-112: Anzeigespalten
- 200: Ortsbestimmungseinheit
- 202, 208: Übertragungseinheit
- 204: Datenbasis

## Patentansprüche

1. Vorrichtung zur Informationsanzeige in einem Fahrzeug, mit einer eine Eingabe von Start- und-Zielinformationen ermöglichenden Dateneingabevorrichtung (100), mit einer Straßeninformationen aufweisenden Datenbank (104), mit einer mit Hilfe der Start- und Zielinformationen anhand der in der Datenbank (104) gespeicherten Straßeninformationen eine Fahrtstrecke berechnenden Streckenberechnungseinheit (102) und mit einer die berechnete Fahrtstrecke anzeigenden Anzeigeeinheit (106),
wobei die Datenbank (104) den Straßeninformationen zugeordnete Zusatzinformationen aufweist und wobei mit der Anzeigeeinheit (106) bei der Anzeige der Fahrtstrecke die Zusatzinformationen anzeigbar sind, **dadurch gekennzeichnet, dass** mit der Anzeigeeinheit (106) zumindest ein Teil der Straßen zumindest eines Teils der Fahrtstrecke in einer Liste (110) anzeigbar ist, wobei vom Benutzer auswählbar ist, ob alle oder nur ein Teil der Straßen der Fahrtstrecke angezeigt werden.

2. Vorrichtung nach Anspruch 1,
**dadurch gekennzeichnet, daß** die Anzeigeeinheit (106) dazu ausgelegt ist, die Zusatzinformationen als graphische Symbole anzuzeigen.

3. Vorrichtung nach einem der Ansprüche 1 oder 2,
**dadurch gekennzeichnet, daß** die Zusatzinformationen Mautinformationen enthalten und daß die Anzeigeeinheit (106) dazu ausgelegt ist, eine mautpflichtige Straße bei der Anzeige der Fahrtstrecke als mautpflichtig, insbesondere die Höhe der Mautgebühren, anzuzeigen.

4. Vorrichtung nach Anspruch 3,
**dadurch gekennzeichnet, daß** die Anzeigeeinheit (106) dazu ausgelegt ist, die mautpflichtige Straße mit einem Münzsymbol anzuzeigen.

5. Vorrichtung nach einem der Ansprüche 1 bis 4,
**dadurch gekennzeichnet, daß** die Vorrichtung eine Sende- und Empfangsvorrichtung (202) aufweist, daß die Sende- und Empfangsvorrichtung (202) dazu ausgelegt ist, die Zusatzinforinatione über eine Lultschnitlstelle (206) von einer entfernten Datenbasis (204) zu laden und daß die Datenbank (104) dazu ausgelegt ist, die geladenen Zusatzinformationen zu speichern.

6. Vorrichtung nach Anspruch 5,
**dadurch gekennzeichnet, daß** die Sende- und Empfangsvorrichtung (202) dazu ausgelegt ist, ortsspezifische Mautgebühren über die Luflschnittstelle (206) von der entfernten Datenbasis (204) zu laden und daß die Datenbank (104) dazu ausgelegt ist, die geladenen, ortsspezifischen Mautgebühren zu speichern.

7. Vorrichtung nach einem der Ansprüche 3 bis 6,
**dadurch gekennzeichnet, daß** die Vorrichtung eine Kostenberechnungseinheit aufweist, die dazu ausgelegt ist, die über die gesamte Fahrtstrecke kumulierten Mautgebühren berechnet und daß die Anzeigeeinheit (106) dazu ausgelegt ist, die kumulierten Mautgebühren anzuzeigen.

8. Vorrichtung nach einem der Ansprüche 1 bis 7,
**dadurch gekennzeichnet, daß** die Streckenberechnungseinheit (102) dazu ausgelegt ist, zumindest zwei alternative Fahrtstrecken zu berechnen, wobei den jeweiligen alternativen Berechnungen unterschiedliche Vorgaben zugrunde liegen.

9. Vorrichtung nach einem der Ansprüche 1 bis 8,
**dadurch gekennzeichnet, daß** die Anzeigeeinheit (106) dazu ausgelegt ist, zumindest einen Teil der Fahrtstrecke auf einer digitalen Straßenkarte anzuzeigen.

10. Vorrichtung nach einem der Ansprüche 5 bis 9,
**dadurch gekennzeichnet, daß** die Vorrichtung eine Ortsbestimmungseinheit (200) aufweist, daß die Ortsbestimmungseinheit (200) dazu ausgelegt ist, den aktuellen Ort des Fahrzeugs zu ermitteln, und daß die Sende- und Empfangsvorrichtung (202) dazu ausgelegt ist, anhand des ermittelten Orts Zusatzinformationen von der räumlich entfernten Datenbasis (204) zu laden und daß die Datenbank (104) dazu ausgelegt ist, die geladenen Informationen zu speichern.

11. Verfahren zur Informationsanzeige in einem Fahrzeug, bei dem mit Hilfe von Start- und Zielinformationen anhand einer Datenbank (104), in der Straßeninformationen gespeichert sind, eine Fahrtstrecke berechnet wird, bei dem die berechnete Fahrtstrecke angezeigt wird, bei dem neben der Fahrtstrecke Zusatzinformationen zu den zu befahrenden Straßen ermittelt werden und bei dem die ermittelten Zusatzinformationen angezeigt werden, **dadurch gekennzeichnet, dass** zumindest ein Teil der Straßen zumindest eines Teiles der Fahrtstrecke in einer Liste (110) angezeigt wird, wobei vom Benutzer ausgewählt wird, ob alle oder nur ein Teil der Straßen der Fahrtstrecke angezeigt werden.

12. Verfahren nach Anspruch 11,
bei dem die ermittelten Zusatzinformationen graphisch angezeigt werden.

13. Verfahren nach einem der Ansprüche 11 oder 12,
bei dem für die zu befahrenden Straßen enstehende Mautgebüren Hilfe von graphischen Münzsymbolen angezeigt werden.

14. Verfahren nach einem der Ansprüche 11 bis 13
bei dem die Zusatzinformationen von einer räumlich entfernten Datenbasis geladen werden und gespeichert werden.

## Claims

1. Apparatus for the display of information in a vehicle, having a data input apparatus (100) which allows input of start and destination information, having a database (104) which contains road information, having a route calculation unit (102) which uses the start and destination information to calculate a route of travel from the road information stored in the database (104), and having a display unit (106) which displays the calculated route of travel, wherein the database (104) contains additional information associated with the road information and wherein the display unit (106) can be used to display the additional information when the route of travel is displayed,
**characterized in that** the display unit (106) can be used to display at least one portion of the roads on at least one portion of the route of travel in a list (110), the user being able to select whether all or just a portion of the roads on a route of travel are displayed.

2. Apparatus according to Claim 1,
**characterized in that** the display unit (106) is designed to display the additional information as graphical symbols.

3. Apparatus according to one of Claims 1 or 2,
**characterized in that** the additional information contains toll information and **in that** the display unit (106) is designed to display a toll road as subject to a toll, particularly the level of the toll charges, when the route of travel is displayed.

4. Apparatus according to Claim 3,
**characterized in that** the display unit (106) is designed to display the toll road with a coin symbol.

5. Apparatus according to one of Claims 1 to 4,
**characterized in that** the apparatus has a transmission and reception apparatus (202), **in that** the transmission and reception apparatus (202) is designed to load the additional information from a remote database (204) via an air interface (206), and **in that** the database (104) is designed to store the loaded additional information.

6. Apparatus according to Claim 5,
**characterized in that** the transmission and reception apparatus (202) is designed to load location-specific toll charges from the remote database (204) via the air interface (206), and **in that** the database (104) is designed to store the loaded, location-specific toll charges.

7. Apparatus according to one of Claims 3 to 6,
**characterized in that** the apparatus has a cost calculation unit which is designed to calculate the toll charges accumulated over the entire route of travel, and **in that** the display unit (106) is designed to display the accumulated toll charges.

8. Apparatus according to one of Claims 1 to 7,
**characterized in that** the route calculation unit (102) is designed to calculate at least two alternative routes of travel, the respective alternative calculations being based on different selections.

9. Apparatus according to one of Claims 1 to 8,
**characterized in that** the display unit (106) is designed to display at least one portion of the route of travel on a digital road map.

10. Apparatus according to one of Claims 5 to 9,
**characterized in that** the apparatus has a position-finding unit (200), **in that** the position-finding unit (200) is designed to ascertain the current location of the vehicle, and **in that** the transmission and reception apparatus (202) is designed to use the ascertained location to load additional information from the physically remote database (204), and **in that** the database (104) is designed to store the loaded information.

11. Method for the display of information in a vehicle, in which start and destination information is used to calculate a route of travel from a database (104) which stores road information, in which the calculated route of travel is displayed, in which additional information relating to the roads to be travelled is ascertained in addition to the route of travel, and in which the ascertained additional information is displayed, **characterized in that** at least one portion of the roads on at least one portion of the route of travel is displayed in a list (110), the user selecting whether all or just a portion of the roads on a route of travel are displayed.

12. Method according to Claim 11,
in which the ascertained additional information is displayed graphically.

13. Method according to one of Claims 11 or 12,
in which toll charges arising for the roads to be travelled are displayed using graphical coin symbols.

14. Method according to one of Claims 11 to 13,
in which the additional information is loaded from a physically remote database and stored.

## Revendications

1. Dispositif d'affichage d'informations dans un véhicule, comprenant un dispositif de saisie de données (100) qui permet la saisie d'informations de départ et de destination, comprenant une base de données (104) qui présente des informations routières, comprenant une unité de calcul du trajet (102) qui calcule un trajet de déplacement à l'aide des informations de départ et de destination et au moyen des informations routières enregistrées dans la base de données (104), et comprenant une unité d'affichage (106) qui affiche le trajet de déplacement calculé, la base de données (104) présentant des informations supplémentaires associées aux informations routières et les informations supplémentaires pouvant être affichées avec l'unité d'affichage (106) lors de l'affichage du trajet de déplacement, **caractérisé en ce qu'**au moins une partie des routes d'au moins une partie du trajet de déplacement peut être affichée dans une liste (110) avec l'unité d'affichage (106), l'utilisateur pouvant sélectionner si la totalité ou une partie seulement des routes du trajet de déplacement sont affichées.

2. Dispositif selon la revendication 1,
**caractérisé en ce que** l'unité d'affichage (106) est conçue pour afficher les informations supplémentaires sous la forme de symboles graphiques.

3. Dispositif selon l'une des revendications 1 ou 2, **caractérisé en ce que** les informations supplémentaires contiennent des informations de péage et que l'unité d'affichage (106) est conçue pour signaler l'obligation de péage d'une route à péage lors de l'affichage du trajet de déplacement, notamment le montant du péage.

4. Dispositif selon la revendication 3,
**caractérisé en ce que** l'unité d'affichage (106) est conçue pour afficher la route à péage avec le symbole d'une pièce de monnaie.

5. Dispositif selon l'une des revendications 1 à 4, **caractérisé en ce que** le dispositif présente un dispositif d'émission et de réception (202), que le dispositif d'émission et de réception (202) est conçu pour charger les informations supplémentaires par le biais d'une interface hertzienne (206) depuis une base de données distante (204) et que la base de données (104) est conçue pour enregistrer les informations supplémentaires chargées.

6. Dispositif selon la revendication 5,
**caractérisé en ce que** le dispositif d'émission et de réception (202) est conçu pour charger les montants de péage spécifiques au lieu par le biais de l'interface hertzienne (206) depuis la base de données distante (204) et que la base de données (104) est conçue pour enregistrer les montants de péage spécifiques au lieu chargés.

7. Dispositif selon l'une des revendications 3 à 6, **caractérisé en ce que** le dispositif présente une unité de calcul du coût qui est conçue pour calculer les montants cumulés des péages sur tout le trajet de déplacement et que l'unité d'affichage (106) est conçue pour afficher les montants cumulés des péages.

8. Dispositif selon l'une des revendications 1 à 7, **caractérisé en ce que** l'unité de calcul du trajet (102) est conçue pour calculer au moins deux trajets de déplacement alternatifs, les calculs alternatifs respectifs se basant sur des indications différentes.

9. Dispositif selon l'une des revendications 1 à 8, **caractérisé en ce que** l'unité d'affichage (106) est conçue pour afficher au moins une partie du trajet de déplacement sur une carte routière numérique.

10. Dispositif selon l'une des revendications 5 à 9, **caractérisé en ce que** le dispositif présente une unité de détermination du lieu (200), que l'unité de détermination du lieu (200) est conçue pour déterminer le lieu courant du véhicule et que le dispositif d'émission et de réception (202) est conçu pour charger les informations supplémentaires du lieu déterminées depuis la base de données distante (204) et que la base de données (104) est conçue pour enregistrer les informations chargées.

11. Procédé d'affichage d'informations dans un véhicule, dans lequel un trajet de déplacement est calculé à l'aide des informations de départ et de destination et au moyen d'une base de données (104) dans laquelle sont enregistrées des informations routières, dans lequel le trajet de déplacement calculé est affiché, dans lequel des informations supplémentaires à propos des routes à parcourir sont déterminées en plus du trajet de déplacement et dans lequel les informations supplémentaires déterminées sont affichées, **caractérisé en ce qu'**au moins une partie des routes d'au moins une partie du trajet de déplacement est affichée dans une liste (110),
l'utilisateur sélectionnant si la totalité ou une partie seulement des routes du trajet de déplacement sont affichées.

12. Procédé selon la revendication 11, dans lequel les informations supplémentaires déterminées sont affichées sous forme graphique.

13. Procédé selon l'une des revendications 11 ou 12, dans lequel les montants de péage encourus pour les routes à parcourir sont affichés à l'aide de symboles graphiques de pièces de monnaie.

14. Procédé selon l'une des revendications 11 à 13, dans lequel les informations supplémentaires sont chargées depuis une base de données distante et enregistrées.
